# EUROPÄISCHE PATENTSCHRIFT

(11) **EP 1 412 150 B1**
(45) Veröffentlichungstag und Bekanntmachung des Hinweises auf die Patenterteilung: **17.12.2008**
(21) Anmeldenummer: 02762389.1
(22) Anmeldetag: 23.07.2002
(51) Int. Cl.: B29B 9/06

(54) **VORRICHTUNG ZUM GRANULIEREN VON AUS DÜSEN AUSTRETENDEN THERMOPLASTISCHEM KUNSTSTOFF**
DEVICE FOR GRANULATING A THERMOPLASTIC, WHICH IS EXTRUDED FROM NOZZLES
DISPOSITIF DE GRANULATION DE MATIERE THERMOPLASTIQUE EXTRUDEE A PARTIR DE BUSES

(30) Priorität: 01.08.2001 DE 10137524
(43) Veröffentlichungstag der Anmeldung: 28.04.2004
(73) Patentinhaber: Rieter Automatik GmbH, 63762 Grossostheim (DE)
(72) Erfinder: MUERB, Reinhardt-Karsten, 63743 Aschaffenburg (DE)
(74) Vertreter: Bardehle, Heinz
(86) Internationale Anmeldenummer: PCT/EP2002/008209
(87) Internationale Veröffentlichungsnummer: WO 2003/011548

(56) Entgegenhaltungen:
- WO-A-01/21371
- DE-B- 1 037 116
- FR-A- 1 449 787
- US-A- 3 324 510

## Beschreibung

Die Erfindung bezieht sich auf eine Vorrichtung zum Granulieren von aus Düsen austretenden thermoplastischen Kunststoffen, welche Düsen in einer Düsenscheibe in einer im wesentlichen kreisförmigen Anordnung vorgesehen sind und von um eine Messerträgerachse rotierenden, von einem Messerträger in Schrägstellung gegenüber der Radialrichtung gehaltenen Messern überstrichen werden, wobei die Messerträgerachse durch den Mittelpunkt der kreisförmigen Anordnung verläuft und ein Kühlmedium der Düsenscheibe und den Messern zur Kühlung der granulierten Kunststoffe zugeführt wird und der Messerträger mit der Messerträgerachse in einem bis zur Düsenscheibe reichenden im wesentlichen runden Gehäuse angeordnet ist. Bei dieser Vorrichtung handelt es sich also um eine solche zur Durchführung des sogenannten Heißabschlags, bei dem das Schneiden der aus den Düsen austretenden Kunststoffsträngen direkt an den Düsen, also in noch schmelzflüssigem Zustand erfolgt.

Eine derartige Vorrichtung ist in der US-PS 3,317,957 dargestellt. Das Besondere dieser bekannten Vorrichtung besteht darin, dass von der Seite der Zuführung der Schmelze des thermoplastischen Kunststoffs auch das Kühlmedium zugeleitet wird, das über parallel zur Messerträgerachse verlaufende Kanäle, die radial innerhalb der kreisförmigen Anordnung der Düsen liegen, zugeführt wird. Der Antrieb des Messerträgers erfolgt dabei ebenfalls von der Seite der Zuführung der Kunststoffschmelze her, so dass die gesamte Anordnung mit den Zuführungen für die Kunststoffschmelze und des Kühlmediums von der Antriebsachse, die in die Messerträgerachse übergeht, durchsetzt wird. Dies führt zu einer insbesondere wegen notwendiger Abdichtung komplizierten Konstruktion, wobei wegen des für die Zuführungen für das Kühlmedium zur Verfügung stehenden beschränkten Raumes diese mit relativ kleinem Querschnitt ausgebildet sind, was dazu führt, dass zur Leitung der notwendigen Menge des Kühlmediums erhebliche Drücke aufgewendet werden müssen.

Für die Kühlung des durch Heißabschlags erzeugten Granulats hat man daher auch einen anderen Weg eingeschlagen, nämlich die Unterbringung der Messer mit Messerträger im Innenraum eines abgeschlossenen Gehäuses, dessen eine Wand eine die Düsenscheibe enthaltende Platte ist, wobei in dem Innenraum die Kühlflüssigkeit derart zu- und abgeführt wird, dass die entsprechenden Leitungen auf die Achse des Messerträgers zu gerichtet sind. Dies führt mit der Rotation des Messerträgers zu einer erheblichen Verwirbelung des Kühlwassers zusammen mit dem Granulat in diesem Innenraum, wobei sich völlig unkontrollierbare Strömungen ergeben, die wegen dabei erzeugter Verwirbelungen ein nachträgliches Verkleben des Granulats erleichtern. Beispiele für diese Art der Kühlwasserzu- und abführung sind in der US-PS 423,207 und der DE-OS 196 42 389 dargestellt.

Der Erfindung liegt die Aufgabe zugrunde, der Strömung des Kühlmediums in der Vorrichtung von vornherein eine Bahn vorzugeben, in der sich eine gleichmäßige Strömung weitgehend frei von Turbulenzen erzielen lässt.

Erfindungsgemäß geschieht dies dadurch, dass in das Gehäuse (13) in tangentialer Richtung ein Kühlmediumzulauf (18) zur Erzeugung einer Ringströmung in das Gehäuse einmündet und das Kühlmedium im wesentlichen mit einer Geschwindigkeit und Drehrichtung im Gehäuse (13) rotiert, die der Drehgeschwindigkeit und Drehrichtung von Durchströmöffnungen (20) im Messerträger (10) entspricht, über die das Kühlmedium zu den Messern (8, 9) gelangt.

Bei dieser Gestaltung erfolgt der Zufluss des Kühlmediums durch die tangentiale Ausrichtung des Kühlmediumszulaufs in einer Weise, dass sich in dem im wesentlichen runden Gehäuse eine Ringströmung ergibt, von der aus über Durchströmöffnungen im Messerträger, der in dem Gehäuse rotiert, das Kühlmedium dann den Messern zugeleitet werden kann, wobei die Rotationsgeschwindigkeit der Ringströmung eine Anpassung dieser Geschwindigkeit an die Rotationsgeschwindigkeit und die Drehrichtung der Durchströmöffnungen im Messerträger ohne weiteres ermöglicht. Das Kühlmedium wird damit aus der Ringströmung im Gehäuse durch mit der gleichen Geschwindigkeit rotierenden Öffnungen im Messerträger aus der Ringströmung abgeleitet und kann danach bei Austritt aus den Durchströmöffnungen im Sinne einer neuen Ringströmung den Messern zugeführt werden, die ebenfalls rotieren, so dass sich insgesamt eine Strömung ergibt, die überall in Rotation verläuft und damit aufgrund der damit verbundenen Gleichmäßigkeit ein sicheres turbulenzfreies Abführen des Granulats ermöglicht.

Zweckmäßig führt man das Kühlmedium nach Durchströmen des Bereichs der rotierenden Messer über einen ebenfalls tangentialen von den Messern wegführenden Kühlmittelauslauf aus dem Gehäuse heraus, wobei das Granulat mitgeführt wird.

Dem Gehäuse gibt man im Bereich der Messer zweckmäßig eine die Messer umgebende Wandung, die spiralförmig den Raum zwischen den Messern und der Wandung in Strömungsrichtung des Kühlmediums so erweitert, dass in diesem die Strömungsgeschwindigkeit des Kühlmediums praktisch konstant bleibt. Bei dieser Gestaltung ergibt sich ein Raum zwischen dem messertragenden Bereich des Messerträgers und der Wandung, der sich in Drehrichtung des Messerträgers gleichmäßig erweitert, so dass in diesem Bereich bei zunehmendem Durchmesser dieses Raumes die Strömungsgeschwindigkeit des Kühlwassers praktisch konstant bleibt, was für ein turbulenzfreies Fließen des Kühlwassers wichtig ist, das damit entsprechend gleichmäßig das Granulat nach dem Schneiden über dem Kühlmittelauslauf abführt.

Um die Funktion der Vorrichtung ständig von außen überwachen zu können, kann man das Gehäuse mindestens teilweise aus einem durchsichtigen Werkstoff, insbesondere Plexiglas, gestalten.

Eine reparaturfreundliche Gestaltung der Vorrichtung ergibt sich dann, wenn man das Gehäuse in zwei Gehäuseteile aufteilt, die im Bereich der Messer trennbar zusammengefügt sind.

Eine vorteilhafte Anordnung des für den Antrieb der Messerträger dienenden Motors ergibt sich dann, wenn dieser auf der der Düsenseite abgewandten Seite angeordnet ist. In diesem Falle stört der Motor die Gestaltung eines Schmelzeverteilers nicht, von dem die Düsen ihre Schmelze erhalten.

In den Figuren sind Ausführungsbeispiele der Erfindung dargestellt. Es zeigen:
- Fig. 1A: die Vorrichtung insgesamt im Schnitt,
- Fig. 1B: einen Schnitt gemäss der Linie A-A aus Fig.1,
- Fig. 2: eine Draufsicht auf die Ringplatte mit diese durchsetzenden Schlitzen für die Aufnahme der leistenartigen Messer, und zwar für drei kreisförmigen Anordnungen von Messern,
- Fig. 3: die gleiche Ringplatte mit in die Durchbrüche eingesetzten Messern,
- Fig. 4: in schematischer Darstellung eine Ringplatte mit einem Messer beim Überstreichen der Düsenscheibe,
- Fig. 5: die Anordnung gemäß Fig. 4 in Draufsicht,
- Fig. 6: die Befestigung des Messers im Durchbruch der Ringplatte,
- Fig. 7: einen Ausschnitt aus der Ringplatte mit einem federbelasteten Messer,
- Fig. 8: eine Variante zu der Anordnung gemäß Fig. 7, bei der das Messer durch einen hydraulisch beaufschlagten Kolben gedrückt wird,
- Fig. 9: die Zuführung einer Hydraulikflüssigkeit durch die Messerträgerachse bis zu der Ringscheibe,
- Fig. 10: eine Draufsicht auf die Düsenscheibe mit einer einzigen ringartigen Anordnung von Düsen,
- Fig. 11: eine vergrößerte Darstellung einiger Düsen gemäß Fig. 10 mit Darstellung eines Messers, das in Radialrichtung den Durchmesser der Düsen gerade überschreitet,

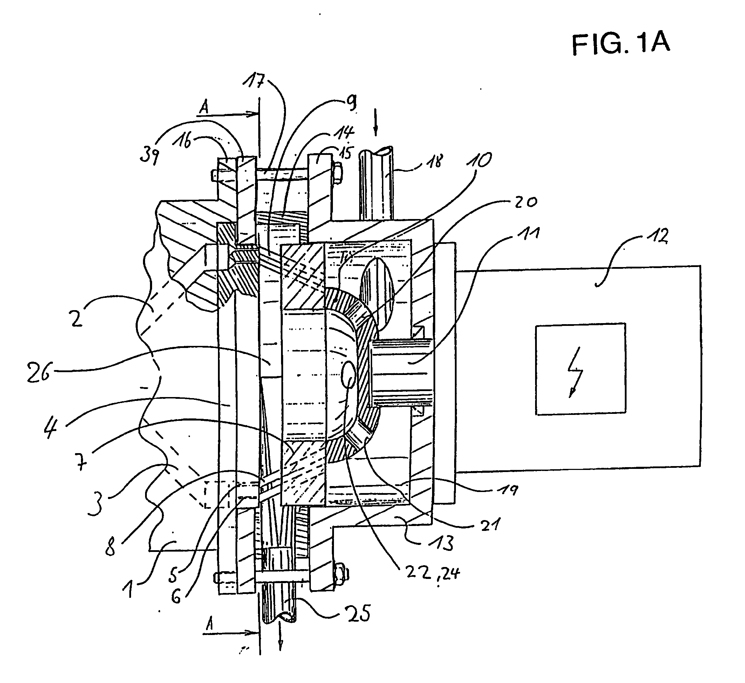

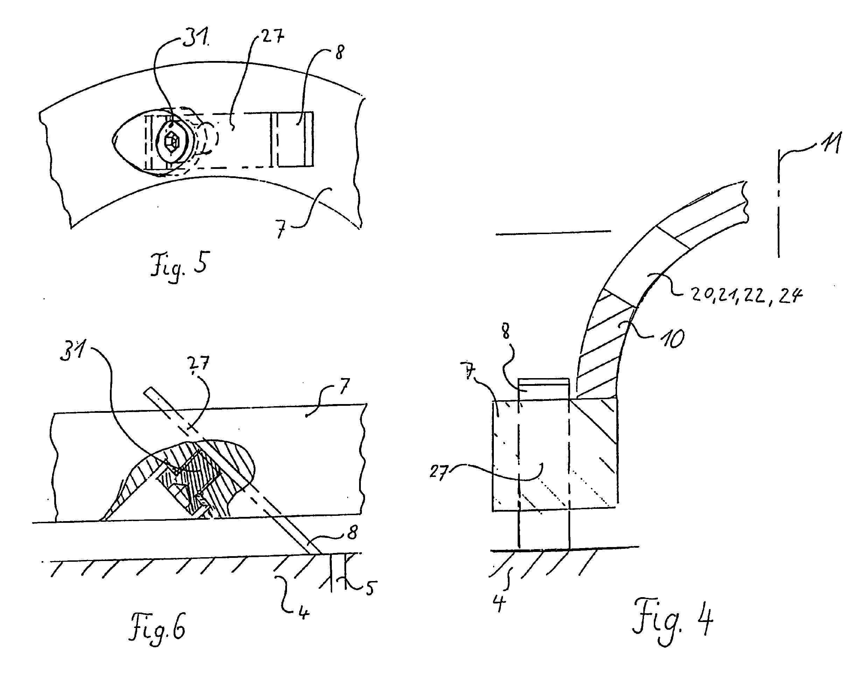

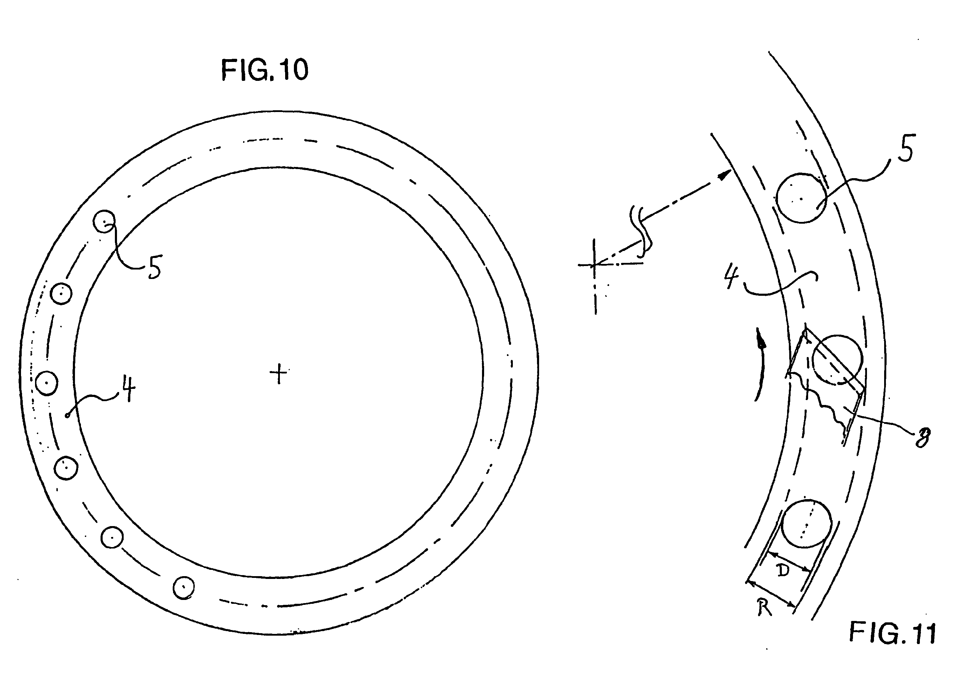

Die Figur 1A zeigt die erfindungsgemäße Vorrichtung im Schnitt, wobei die nicht zur Erfindung gehörenden Bestandteile, nämlich ein Extruder zur Zuführung eines schmelzflüssigen Kunststoffes weggelassen ist. Die Vorrichtung enthält den in bekannter Weise eingesetzten Schmelzeverteiler 1, der mehrere Schmelzkanäle, hier die beiden Kanäle 2 und 3, aufweist. An den Schmelzverteiler 1 ist mittels hier nicht dargestellter Befestigungsmittel die Düsenscheibe 4 angeflanscht, in die die Schmelzekanäle 2 und 3 einmünden und in die Düsen 5 und 6 übergehen. Im Betreib tritt aus den Düsen 5 und 6 in schmelzflüssiger Form der zu granulierende thermoplastische Kunststoff aus. Die Düsenscheibe 4 weist weitere Düsen auf, deren Lage in kreisförmiger Anordnung aus der Figur 10 zu entnehmen ist. Der Düsenscheibe 4 gegenüber ist die Ringplatte 7 angeordnet, aus der die Messer 8 und 9 (und weitere nicht dargestellte Messer) herausragen und in bekannter Weise die der Ringplatte 7 zugewandte Oberfläche der Düsenscheibe 4 überstreichen und dabei die aus den Düsen 5 und 6 ausgetretenen Kunststoffstränge zerschneiden. Bezüglich der Anordnung und Lagerung der Messer 8 und 9 in der Ringplatte 7 wird auf die Erläuterungen zu Figur 4 bis 6 verwiesen. Die Ringplatte 7 ist an dem glockenförmig gestalteten Messerträger 10 befestigt, der am Ende der Messerträgerachse 11 sitzt, die in den prinzipiell dargestellten Antriebsmotor 12 einmündet. Von dem Antrieb 12 wird über die Messerträgerachse 11 der Messerträger 10 und damit die Ringplatte 7 mit den Messern 8 und 9 in Rotation versetzt, wobei, wie vorstehend dargelegt, das Granulieren der zugeführten Kunststoffstränge erfolgt.

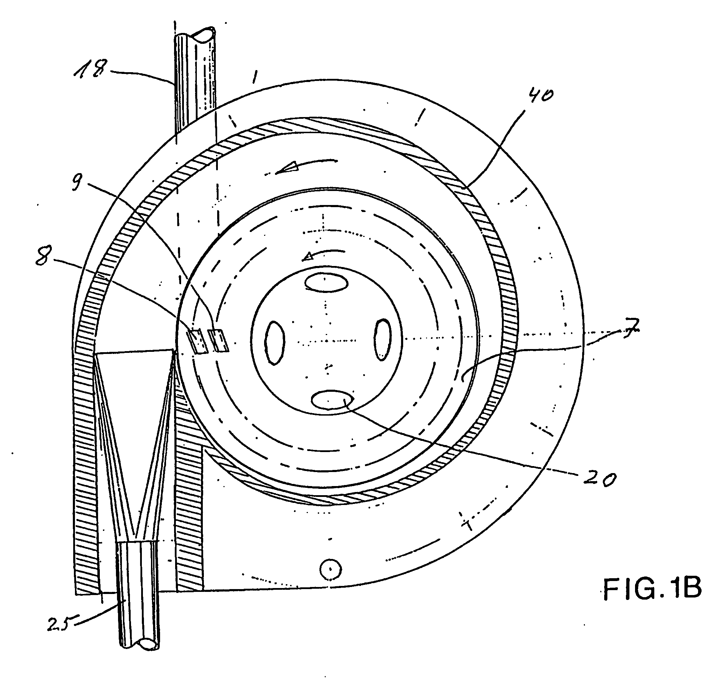

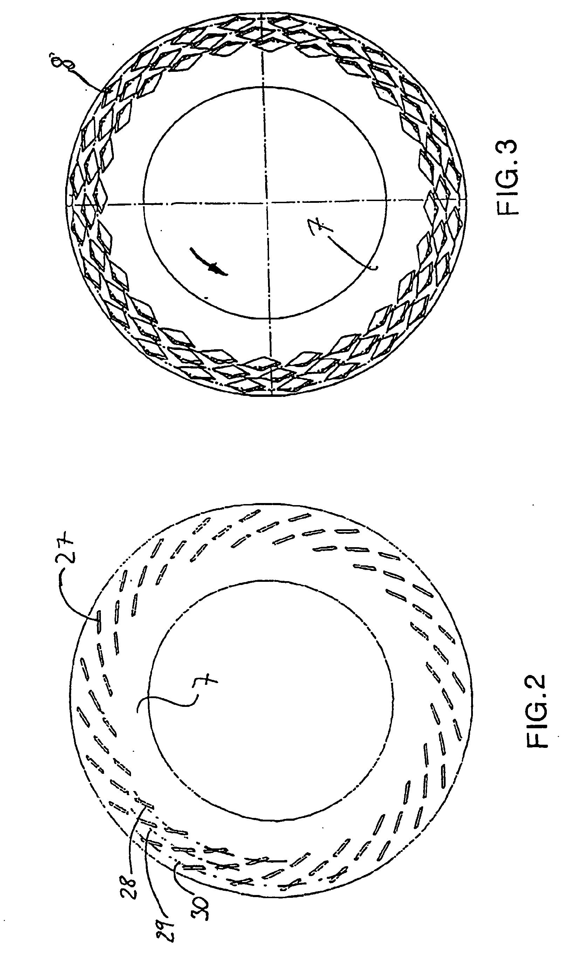

Die inneren Teile dieser Vorrichtung sind von dem Gehäuse 13 eingeschlossen, das sich in die Abdeckung 14 fortsetzt, die sich über den Bereich der Düsen 5 und 6 und der Messer 8 und 9 erstreckt. Die beiden miteinander zusammengehörenden Bereiche der Kunststoffzuführung und des Granulierens werden über die flanschartigen Ansätze 15 des Gehäuses 13 und 16 des Schmelzeverteilers 1 zusammengehalten, und zwar mittels der Schrauben 17, bei deren Anziehen die Abdekkung 14 fest eingeschlossen wird, womit die Gesamtheit der Vorrichtung durch das aus den Teilen 13 und 14 bestehende Gehäuse sich in den Bereich des Schmelzeverteilers 1 erstreckt. Wie die Figur 2 zeigt, auf die unten näher eingegangen wird, ist die Vorrichtung gemäß Figur 1 im wesentlichen rotationssymmetrisch gestaltet, das heißt im wesentlichen weisen das Gehäuse 13 mit der Abdeckung 14 außen eine kreisrunde Oberfläche auf. Durch die Halterung 39 wird der Düsenscheibe 4 die notwendige Zentrierung gegeben.

Die zu dem Gehäuse 13 gehörende Abdeckung 14 ist hier aus Plexiglas geformt, das wegen seiner Durchsichtigkeit ein Beobachten der Vorgänge in dem Bereich ermöglicht, in dem sich das Granulieren abspielt.

Zur Kühlung des von den Messern 8 und 9 geschnittenen Granulats wird dem Gehäuse 13 und dem Bereich, in dem sich das Granulieren abspielt, ein Kühlmedium, hier Kühlwasser, zugeführt, und zwar durch den Kühlmittelzulauf 18. Der Kühlmittelzulauf 18 mündet praktisch tangential in den Innenraum 19 des Gehäuses 13, wodurch sich im Gehäuse 13 eine Rotationsströmung ergibt, deren Rotationsgeschwindigkeit durch die Menge des zugeführten Wassers eingestellt werden kann. Das Kühlwasser gelangt aus dem Innenraum 19 über die Durchströmöffnungen 20, 21 und 22 in den Hohlraum 24 des glockenförmig ausgebildeten Messerträgers 10. Der Messerträger 10 rotiert mit der ihm vom Antriebsmotor 12 gegebenen Rotationsgeschwindigkeit. Um nun die Zuführung des Kühlwassers über die Durchströmöffnungen 20, 21 und 22 zu dem Hohlraum 24 im Messerträger 10 so zu gestalten, dass das im Innenraum 19 rotierende Kühlwasser weitgehend turbulenzfrei in die Durchtrittsöffnung 20, 21 und 22 abströmen kann, wird die Zufuhrgeschwindigkeit des Kühlwassers und damit die Rotationsgeschwindigkeit des Kühlwassers im Innenraum 19 so geregelt, dass das Kühlwasser im Innenraum 19 im Bereich der Durchtrittsöffnungen 20, 21 und 22 mit der gleichen Rotationsgeschwindigkeit umläuft wie die Durchtrittsöffnungen 20, 21 und 22 rotieren. Auf diese Weise vermeidet man an dieser Stelle durch unterschiedliche Rotationsgeschwindigkeiten Energieverluste. Ermöglicht wird diese Art der Anpassung der Rotationsgeschwindigkeiten durch die tangentiale Zuführung des Kühlwassers über den Kühlmittelzulauf 18.

Der Hohlraum 24 des Messerträgers 10 steht nun, wie ersichtlich, in direkter Verbindung mit den Messern 8 und 9 sowie dem Bereich der Düsenscheibe 4, da sich der glockenförmige Messerträger 10 zur Düsenscheibe 4 hin öffnet, so dass das in den Hohlraum 24 des Messerträgers 10 eingetretene Kühlwasser nach außen an den Messer 8 und 9 vorbei und über die Oberfläche der Düsenscheibe 4 nach außen hin abfließen kann. Dieser Abfluss wird durch den ebenfalls tangential angeordneten Kühlmittelauslauf 25 erleichtert, der aus dem Zwischenraum 26 zwischen der Düsenscheibe 4 und der Ringplatte 7 herausführt. In diesem Zwischenraum kreist das Kühlwasser aufgrund der Drehung des Messerträgers 10 und der Messer 8 und 9, und zwar in einer Richtung, die direkt in die Tangentialrichtung gemäß dem Kühlmittelauslauf 25 übergeht. Damit ist also für den gesamten Durchfluss des Kühlwassers jeweils eine Richtung und ein Übergang von Bereich zu Bereich geschaffen, der dem Kühlmitteldurchlauf den geringstmöglichen Widerstand entgegensetzt und damit entsprechend energiemindernd betreffend den Antriebsmotors 12 wirkt.

In der Figur 1B ist ein Schnitt längs der Linie A-A aus Fig. 1A dargestellt, der also längs der den Messern zugewandten Seite der Düsenscheibe 4 verläuft. Damit ergibt sich in der Figur 1B eine Draufsicht auf die Ringplatte 7 mit den Messern 8 und 9. Die Ringplatte 7 wird von dem Messerträger 10 gehalten, in dem die Durchströmöffnungen 20, 21 und 22 vorgesehen sind (die vierte gezeichnete Durchströmöffnung ist in Figur 1 nicht sichtbar). Figur 1B zeigt weiterhin die Abdeckung 14, die von der Stelle des Kühlmittelauslaufs 25 spiralförmig um die Ringplatte 7 verläuft, wobei sich der Raum zwischen der Ringplatte 7 mit den Messern 8 und 9 bis zur Außenwand der Abdeckung 14 ständig verkleinert bzw. in Strömungsrichtung (siehe Pfeil) erweitert, so dass in diesem Bereich bei zunehmendem Durchmesser dieses Raumes die Strömungsgeschwindigkeit des Kühlwassers praktisch konstant bleibt, was für ein turbulenzfreies Fließen des Kühlwassers wichtig ist, das damit entsprechend gleichmäßig das Granulat nach dem Schneiden über den Kühlmittelauslauf abführt.

In Figur 2 ist die an den Messerträger befestigte Ringplatte 7 einzeln ohne Messer dargestellt, und zwar in Draufsicht auf die Seite mit dem Austritt der Messer. Damit zeigt die Figur 2 die Öffnungen der einzelnen Durchbrüche 27, in die, wie weiter unten näher erläutert wird, die einzelnen Messer eingestreckt werden. Gemäß Figur 2 handelt es sich um eine Ringplatte mit drei kreisförmigen Anordnungen 28, 29, 30.

In Figur 3 ist die gleiche Ringplatte 7 dargestellt, wobei jedoch in die Durchbrüche 27 jeweils ein Messer 8 eingesteckt ist. Wie ersichtlich, ragen diese Messer 8 schräg gegenüber der Oberfläche der Ringplatte 7 und in einen Winkel geneigt gegenüber der Rotationsrichtung aus den Durchbrüchen 27 heraus. Die Messer 8 nehmen dabei in Bezug auf die Rotationsrichtung eine Schräglage ein, die so gewählt ist, dass sich aufgrund der Schräglage bei Drehung der Ringplatte sich nur ein geringer Strömungswiderstand gegenüber der sich einstellenden Strömung des Kühlwassers ergibt. Das Kühlwasser fließt nämlich von innen nach außen (siehe Darlegung zur Figur 1A), wobei die Strömung des Kühlwassers nicht direkt radial nach außen, sondern spiralförmig verläuft. An den jeweiligen Winkel dieser Spirale ist die jeweilige Schräglage der Messer 8 angepasst, so dass diese in Bezug auf das hindurchtretende Kühlwasser diesem nur einen geringen Strömungswiderstand entgegensetzen. Die Drehrichtung der Ringplatte 7 ist durch den eingezeichneten Pfeil angedeutet.

In Figur 4 ist die Anordnung eines Messers 8 in Bezug auf die Düsenscheibe 4 mit der Düse 5 schematisch dargestellt. Das Messer 8 ist in einen Durchbruch 27 in der Ringplatte 7 eingeschoben und in dieser, wie weiter unter erläutert, befestigt. Die Düsenplatte geht in den glockenförmigen Messerträger 10 über, der auf der durch die strichpunktierte Linie angedeuteten Messerträgerachse 11 befestigt ist.

Figur 5 zeigt eine Draufsicht auf den in Figur 4 mit dem Messer 8 dargestellten Bereich der Ringplatte 7, aus der das Messer 8 herausragt. Das Messer 8 ist in den durch die gestrichelten Linien angedeuteten Durchbruch 27 eingeschoben. Es wird durch die Schraube 31 an der Ringplatte 7 befestigt.

In der Figur 6 ist die Darstellung gemäß Figur 5 in Seitensicht gezeigt, aus der sich deutlich ergibt, wie in den Messerträger 7 das Messer eingeschoben ist, und zwar in den dafür vorgesehenen Durchbruch 27. Die Schraube 31 klemmt dann das Messer 8 in dem Durchbruch fest.

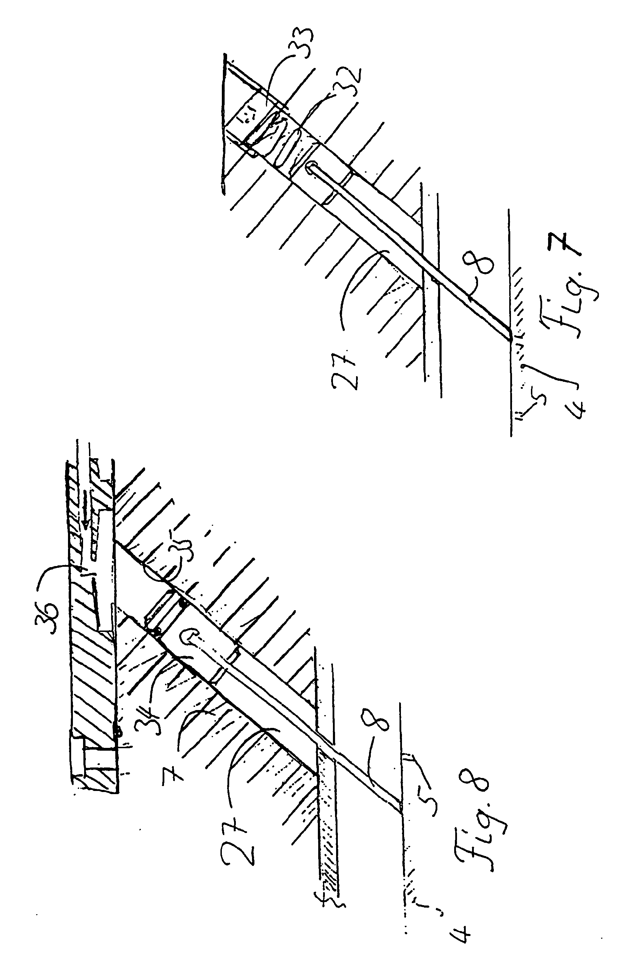

Figur 7 zeigt, ähnlich wie Figur 6, einen Abschnitt der Ringplatte 7 mit dem Durchbruch 27, in den das Messer 8 eingeschoben ist. Das Messer 8 endet hier im mittleren Bereich der Ringplatte 7, wo die rückwärtige Seite des Messers 8 auf die Schraubenfeder 32 trifft, die sich gegen ein Widerlager 33 abstützt. Die Schraubenfeder 32 drückt die verschiebbar und damit nachstellbar in der Ringplatte 7 gelagerten Messer 8, die sich dadurch ständig mit einem entsprechenden Druck an die Düsenscheibe 4 anlegen. Bei Verschleiß des Messers 8, mit dem sich dieses verkürzt, drückt die Schraubenfeder 32 das Messer automatisch weiter vor in Richtung Düsenscheibe 4, womit der eingetretene Verschleiß vollständig kompensiert wird.

In der Figur 8 ist eine Variante zur Ausführung gemäß Figur 7 dargestellt, bei der die rückwärtige Seite des Messers 8 in einem Kolben 34 gelagert ist, der in einer entsprechenden Bohrung 35 geführt ist. Die Bohrung 35 setzt gewissermaßen den Durchbruch 27 zur Rückseite der Düsenscheibe 4 fort. Auf den Kolben 35 wirkt ein entweder durch eine Flüssigkeit oder ein Gas ausgeübter Druck, der über eine besondere Zuführung 36 der Bohrung 35 zugeführt wird. Die Kompensation des Verschleißes am Messer 8 erfolgt hier also in der gleichen Weise, wie dies in Zusammenhang mit Figur 7 oben beschrieben ist.

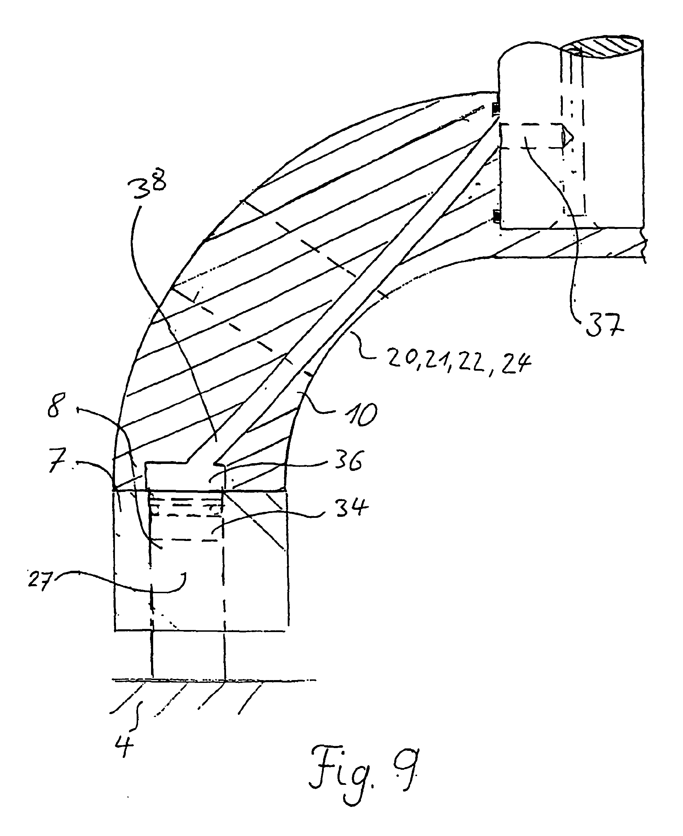

In der Figur 9 ist die Zuführung eines Druckmediums, wie es bei der Anordnung gemäß Figur 8 benötigt wird, schematisch dargestellt. Das Druckmedium gelangt hier über die Messerträgerachse 10 in einen zentralen Verteiler 37, von dem aus über eine Bohrung 38 das Druckmedium über den Messerträger 10 in die Ringplatte 7 gelangt.

Figur 10 zeigt die Düsenscheibe 4, die hier nur mit einer kreisförmigen Anordnung von Düsen 4, 5 versehen sind. Die Düsen 4, 5 sind durch Bohrungen mit kreisförmigem Querschnitt gleichen Durchschnitts gebildet, sie werden, wie dies anhand der Figur 11 erläutert wird, von dem Messer 8 überstrichen.

In der Figur 11 ist ein Abschnitt der Düsenscheibe 4 mit drei Düsen 5 dargestellt, dazu das schräg gegenüber der Radialrichtung angeordnete Messer 8. Die Radialausdehnung R des Messers 8 ist in Figur 11 dargestellt. Sie ist ersichtlich geringfügig größer als der Durchmesser D der Düsen 5. Dies hat zur Folge, dass die Messer 8 gerade ausreichend für einen Schnitt durch über die Düsen 5 zugeführte Kunststoffschmelze sorgen, wobei die Granulen individuell und voneinander unabhängig geschnitten werden, da die Messer nur geringfügig hinsichtlich ihrer Radialausdehnung R größer sind als der Durchmesser D, so dass sich bei der Rotation der Messer 8 für diese nur ein minimaler Widerstand gegenüber dem umspülenden Kühlwasser ergibt.

## Patentansprüche

1. Vorrichtung zum Granulieren von aus Düsen (5, 6) austretenden thermoplastischen Kunststoffen, welche Düsen (5, 6) in einer Düsenscheibe (4) in einer im wesentlichen kreisförmigen Anordnung vorgesehen sind und von um eine Messerträgerachse (11) rotierenden, von einem Messerträger (10, 7) in Schrägstellung gegenüber der Radialrichtung gehaltenen Messern (8, 9) überstrichen werden, wobei die Messerträgerachse (11) durch den Mittelpunkt der kreisförmigen Anordnung verläuft und ein Kühlmedium der Düsenscheibe (4) und den Messern (8, 9) zur Kühlung der granulierten Kunststoffe zugeführt wird und der Messerträger (10, 7) mit der Messerträgerachse (11) in einem bis zur Düsenscheibe (4) reichenden im wesentlichen runden Gehäuse (13) angeordnet ist, **dadurch gekennzeichnet, dass** in das Gehäuse (13) in tangentialer Richtung ein Kühlmediumzulauf (18) zur Erzeugung einer Ringströmung in das Gehäuse einmündet und das Kühlmedium im wesentlichen mit einer Geschwindigkeit und Drehrichtung im Gehäuse (13) rotiert, die der Drehgeschwindigkeit und Drehrichtung von Durchströmöffnungen (20) im Messerträger (10) entspricht, über die das Kühlmedium zu den Messern (8, 9) gelangt.

2. Vorrichtung nach Anspruch 1, **dadurch gekennzeichnet, dass** das Kühlmedium über einen tangential von den Messern (8, 9) wegführenden, das Gehäuse (13) durchsetzenden Kühlmittelauslauf (25) zusammen mit dem Granulat abgeführt wird.

3. Vorrichtung nach Anspruch 1 oder 2, **dadurch gekennzeichnet, dass** das Gehäuse (13) im Bereich der Messer (8, 9) eine die Messer (8, 9) umgebende Wandung (40) besitzt, die spiralförmig den Raum zwischen den Messern (8, 9) und der Wandung (40) in Strömungsrichtung des Kühlmediums so erweitert, dass in diesem die Strömungsgeschwindigkeit des Kühlmediums praktisch konstant bleibt.

4. Vorrichtung nach einem der Ansprüche 1 bis 3, **dadurch gekennzeichnet, dass** das Gehäuse (13) mindestens teilweise aus einem durchsichtigen Werkstoff, insbesondere Plexiglas, besteht.

5. Vorrichtung nach einem der Ansprüche 1 bis 4, **dadurch gekennzeichnet, dass** das Gehäuse (13) zwei Gehäuseteile aufweist, die im Bereich der Messer (8, 9) trennbar zusammengefügt sind.

6. Vorrichtung nach einem der Ansprüche 1 bis 5, **dadurch gekennzeichnet, dass** ein dem Antrieb der Messerträgerachse (11) dienender Motor (12) auf der der Düsenscheibe (4) abgewandten Seite angeordnet ist.

## Claims

1. Device for pelletising thermoplastics emerging from dies (5, 6), in which the dies (5, 6) are provided in a substantially circular arrangement in a die plate (4) and knives (8, 9) which are held in an inclined position relative to the radial direction by a knife holder (10, 7) and rotate about a knife holder shaft (11) sweep across the said dies, the knife holder shaft (11) extending through the centre of the circular arrangement, a coolant being supplied to the die plate (4) and the knives (8, 9) in order to cool the pelletised plastics and the knife holder (10, 7) and the knife holder shaft (11) being arranged in an essentially round housing (13) extending as far as the die plate (4), **characterised in that** a coolant inlet (18) leads into the housing (13) in the tangential direction in order to produce an annular flow into the housing and the coolant rotates in the housing (13) substantially at a speed and in a direction of rotation corresponding to the speed and direction of rotation of flow openings (20) in the knife holder (10) through which the coolant reaches the knives (8, 9).

2. Device according to claim 1, **characterised in that** the coolant is led away together with the pellets via a coolant outlet (25) passing through the housing (13) and leading tangentially away from the knives (8, 9).

3. Device according to claim 1 or claim 2, **characterised in that** the housing (13) is provided in the region of the knives (8, 9) with a wall (40) surrounding the knives (8, 9) and widening the space between the knives (8, 9) and the wall (40) in a spiral manner in the flow direction of the coolant such that the flow speed of the coolant therein remains virtually constant.

4. Device according to one of claims 1 to 3, **characterised in that** the housing (13) consists at least partially of a transparent material, in particular plexiglass.

5. Device according to one of claims 1 to 4, **characterised in that** the housing (13) has two parts joined together in a separable manner in the region of the knives (8, 9).

6. Device according to one of claims 1 to 5, **characterised in that** a motor (12) serving to drive the knife holder shaft (11) is arranged on the side directed away from the die plate (4).

## Revendications

1. Dispositif pour granuler des matières plastiques thermoplastiques sortant de buses (5, 6), lesquelles buses (5, 6) sont ménagées dans un disque à buses (4) selon un agencement sensiblement circulaire et balayées par des lames (8, 9) qui tournent autour d'un axe de porte-lames (11) et qui sont maintenues par un porte-lames (10, 7) dans une position oblique par rapport à la direction radiale, l'axe de porte-lames (11) passant par le centre de l'agencement circulaire et un agent de refroidissement étant amené au disque à buses (4) et aux lames (8, 9) pour refroidir les matières plastiques granulées, et le porte-lames (10, 7) avec l'axe de porte-lames (11) étant disposé dans un carter (13) sensiblement circulaire s'étendant jusqu'au disque à buses (4), **caractérisé en ce qu'**une arrivée d'agent de refroidissement (18) débouche dans le carter (13) en direction tangentielle pour générer un courant annulaire dans le carter et **en ce que** l'agent de refroidissement tourne dans le carter (13) sensiblement à une vitesse et dans une direction de rotation correspondant à la vitesse de rotation et à la direction de rotation d'ouvertures de passage (20) dans le porte-lames (10), par l'intermédiaire desquelles l'agent de refroidissement parvient aux lames (8, 9).

2. Dispositif selon la revendication 1, **caractérisé en ce que** l'agent de refroidissement est évacué en même temps que le granulat par l'intermédiaire d'une sortie de liquide de refroidissement (25) qui s'éloigne tangentiellement des lames (8, 9) et traverse le carter (13).

3. Dispositif selon la revendication 1 ou 2, **caractérisé en ce que** le carter (13) possède dans la zone des lames (8, 9) une paroi (40) qui entoure les lames (8, 9) et qui élargit en spirale l'espace entre les lames (8, 9) et la paroi (40) dans la direction d'écoulement de l'agent de refroidissement, de manière que la vitesse d'écoulement de l'agent de refroidissement dans celui-ci reste pratiquement constante.

4. Dispositif selon l'une des revendications 1 à 3, **caractérisé en ce que** le carter (13) est réalisé au moins partiellement dans un matériau transparent, en particulier en plexiglas.

5. Dispositif selon l'une des revendications 1 à 4, **caractérisé en ce que** le carter (13) comporte deux parties de carter qui sont assemblées de manière séparable dans la zone des lames (8, 9).

6. Dispositif selon l'une des revendications 1 à 5, **caractérisé en ce qu'**un moteur (12) servant à l'entraînement de l'axe de porte-lames (11) est disposé du côté opposé au disque à buses (4).
